# EUROPÄISCHE PATENTSCHRIFT

(11) **EP 3 762 622 B1**
(45) Veröffentlichungstag und Bekanntmachung des Hinweises auf die Patenterteilung: **05.04.2023**
(21) Anmeldenummer: 19705527.0
(22) Anmeldetag: 19.02.2019
(51) Int. Cl.: F16B 13/06

(54) **SPREIZANKER MIT ZUSATZSPREIZKÖRPER**
EXPANSION ANCHOR COMPRISING ADDITIONAL EXPANSION BODY
ANCRE D'EXPANSION POURVU DE CORPS D'EXPANSION SUPPLÉMENTAIRE

(30) Priorität: 05.03.2018 EP 18159864
(43) Veröffentlichungstag der Anmeldung: 13.01.2021
(73) Patentinhaber: Hilti Aktiengesellschaft, 9494 Schaan (LI)
(72) Erfinder: HAEUSSLER, Karl, 7222 Lunden (CH); SHIMAHARA, Hideki, 9472 Grabs (CH); FRENSEMEIER, Mareike, 9470 Buchs (CH); LI, Yijun, 9470 Buchs (CH); YAN, Wentao, 9470 Buchs SG (CH); GUEVARA ARRIOLA, Arturo, Irving, TX 75063 (US)
(74) Vertreter: Hilti Aktiengesellschaft Corporate Intellectual Property
(86) Internationale Anmeldenummer: PCT/EP2019/054033
(87) Internationale Veröffentlichungsnummer: WO 2019/170405

(56) Entgegenhaltungen:
- DE-A1- 3 445 713
- DE-A1- 19 729 235
- DE-A1-102011 087 548
- IT-A1-201800 020 695
- US-A- 4 921 381

## Beschreibung

Die Erfindung betrifft einen Spreizanker gemäss dem Oberbegriff des Anspruchs 1. Ein solcher Spreizanker ist ausgestattet mit einem Ankerbolzen, einer Spreizhülse, welche den Ankerbolzen umgibt, wobei der Ankerbolzen einen Spreizhülsen-Spreizbereich zum radialen Verdrängen der Spreizhülse aufweist, und zumindest einem Zusatzspreizkörper, der an der Spreizhülse angeordnet ist, wobei der Ankerbolzen einen Zusatzspreizkörper-Spreizbereich zum radialen Verdrängen des Zusatzspreizkörpers aufweist, und wobei der Zusatzspreizkörper an der dem Ankerbolzen radial zugewandten Seite der Spreizhülse an der Spreizhülse angeordnet ist.

Die EP0267148 A1 zeigt einen Spreizanker mit zwei hintereinander angeordneter Spreizhülsen. Vor jeder dieser Spreizhülsen ist ein Spreizkonus angeordnet. Bei der Montage werden die beiden Spreizhülsen an ihrem jeweils vorderen Ende radial aufgeweitet.

Die EP0134391 A1 zeigt einen Spreizanker, bei dem an der Spreizhülse ein zusätzlicher Spreizkörper angeordnet ist, der von einer an der Spreizhülse ausgebildeten Schräge radial verdrängt wird.

Die EP2689147 B1 zeigt einen Spreizanker, dessen Spreizhülse radial nach aussen vorstehende Erhebungen aufweist, um die anfängliche Reibung zwischen Spreizhülse und Beton zu erhöhen. Insbesondere können solche Erhebungen in einem Prägeverfahren erhalten werden.

Die US 4921381 A offenbart einen Spreizanker, dessen Spreizhülse eine Durchtrittsöffnung aufweist, in der eine Kugel radial verschiebbar gelagert ist. Beim Verankern läuft die Kugel auf eine Rampe am Ankerbolzen, wobei ein radiales Verschieben der Kugel bewirkt wird. Die Kugel wird dadurch in eine die Spreizhülse radial überragende Lage gebracht, und schafft einen formschlüssigen Eingriff mit der Wandung des Bohrloches. Bei einem weiteren axialen Verschieben des Ankerbolzens gegenüber der Spreizhülse wird die Spreizhülse auch durch einen Spreizkonus des Ankerbolzens radial aufgeweitet.

Die DE 34 45 713 A1 beschreibt einen Spreizanker mit zwei verschachtelten Hülsen.

Aufgabe der Erfindung ist es, einen Spreizanker anzugeben, der bei geringem Herstellungs- und Montageaufwand besonders gute Lastwerte aufweist, insbesondere in unterschiedlichen Lastsituation, und der besonders vielfältig einsetzbar ist.

Die Aufgabe wird erfindungsgemäss durch einen Spreizanker mit den Merkmalen des Anspruchs 1 gelöst. Bevorzugte Ausführungsformen sind in den abhängigen Ansprüchen angegeben.

Ein erfindungsgemässer Spreizanker ist dadurch gekennzeichnet, dass die Spreizhülse eine Zunge aufweist, welche den Zusatzspreizkörper zumindest bereichsweise radial überdeckt, und dass der Zusatzspreizkörper in einer in der Spreizhülse ausgebildeten Ausnehmung angeordnet ist, wobei die Zunge die Ausnehmung zumindest bereichsweise radial überdeckt.

Der Zusatzspreizkörper ist an der dem Ankerbolzen radial zugewandten Seite der Spreizhülse an der Spreizhülse angeordnet.

Es wird also an der Spreizhülse zumindest ein weiterer, unabhängiger Spreizkörper - der Zusatzspreizkörper - vorgesehen, welcher, wie auch die Spreizhülse selbst, durch einen am Ankerbolzen angeordneten Spreizbereich radial aufgeweitet und verankert werden kann. Durch die Bereitstellung mehrerer spreizender Elemente werden zusätzliche konstruktive Freiheitsgrade zur Verfügung gestellt, die in besonders einfacher Weise eine besonders gute Anpassung des Spreizankers an unterschiedliche Lastsituationen ermöglichen können. Insbesondere kann die Expansionsfunktion an der Spreizhülse durch zusätzliche Expansion am Zusatzspreizkörper ergänzt werden. Ein weiterer Gedanke kann darin gesehen werden, den Zusatzspreizkörper, genauso wie die Spreizhülse, durch den Ankerbolzen zu betätigen. Zu diesem Zweck ist erfindungsgemäss der Zusatzspreizkörper dem Ankerbolzen für eine Interaktion des Ankerbolzens mit dem Zusatzspreizkörper zugewandt, und der Ankerbolzen weist einen dem Zusatzspreizkörper gewidmeten Spreizbereich auf, nämlich den Zusatzspreizkörper-Spreizbereich. Der zumindest eine Zusatzspreizkörper expandiert somit auf einer eigenen Expansionsfläche, insbesondere unabhängig von der primären Expansion der Spreizhülse. Durch diese Konfiguration können die Expansionsprozesse der spreizenden Elemente in besonders einfacher und zugleich zuverlässiger Weise besonders präzise aufeinander abgestimmt werden, so dass besonders gute Lastwerte, insbesondere in unterschiedlichen Lastsituationen, erhalten werden können. Gemäss einem Grundgedanken der Erfindung ist der Zusatzspreizkörper an der dem Ankerbolzen radial zugewandten Seite der Spreizhülse, also an der Innenseite der Spreizhülse, an der Spreizhülse angeordnet. Demgemäss befindet sich der Zusatzspreizkörper radial zwischen dem Ankerbolzen und der Spreizhülse, so dass der Zusatzspreizkörper-Spreizbereich des Ankerbolzens, vorzugsweise unmittelbar, gegen den Zusatzspreizkörper wirken kann. Insbesondere steht der Zusatzspreizkörper radial aussenseitig nicht frei, sondern ist radial aussenseitig zumindest teilweise von der Spreizhülse bedeckt. Der Zusatzspreizkörper kann, wenn er vom Zusatzspreizkörper-Spreizbereich radial verdrängt wird, seinerseits den radial weiter aussenliegenden Bereich der Spreizhülse radial verdrängen und die Spreizhülse, insbesondere unter Ausbildung eines Hinterschnitts, an die umgebende Lochwand anpressen und somit im Bohrloch verankern. Darüber hinaus kann die radial weiter aussen liegende Spreizhülse den Zusatzspreizkörper vor der Montage am Spreizanker sichern. Somit kann in besonders einfacher Weise eine besonders gute Leistungsfähigkeit und Handhabbarkeit des Spreizankers gegeben sein.

Vorzugsweise steht der Zusatzspreizkörper über die Spreizhülse radial nach innen zum Ankerbolzen hin vor. Insbesondere befindet sich der Zusatzspreizkörper auf Höhe der Spreizhülse, das heisst die Spreizhülse überlappt den Zusatzspreizkörper in axialer Richtung.

Der Spreizhülsen-Spreizbereich des Ankerbolzens kann die Spreizhülse radial verdrängen, wenn der Spreizhülsen-Spreizbereich in die Spreizhülse eingezogen wird, insbesondere wenn der Spreizhülsen-Spreizbereich relativ zur Spreizhülse axial nach hinten versetzt wird. Vorzugsweise dient der Spreizhülsen-Spreizbereich zum radialen Verdrängen der Spreizhülse beim axialen Versetzen des Spreizhülsen-Spreizbereichs relativ zur Spreizhülse nach hinten. Zweckmässigerweise konvergiert der Spreizhülsen-Spreizbereich des Ankerbolzens nach hinten hin, was insbesondere beinhalten soll, dass sich im Spreizhülsen-Spreizbereich die Oberfläche des Ankerbolzens nach hinten hin an die Längsachse des Ankerbolzens annähert, insbesondere kontinuierlich annähert. Beispielsweise kann der Spreizhülsen-Spreizbereich eine Konusform bilden.

Der Zusatzspreizkörper-Spreizbereich des Ankerbolzens kann den Zusatzspreizkörper radial verdrängen, wenn der Zusatzspreizkörper-Spreizbereich relativ zum Zusatzspreizkörper axial nach hinten versetzt wird. Vorzugsweise dient der Zusatzspreizkörper-Spreizbereich zum radialen Verdrängen des Zusatzspreizkörpers beim axialen Versetzen des Zusatzspreizkörper-Spreizbereichs relativ zum Zusatzspreizkörper nach hinten. Zweckmässigerweise konvergiert der Zusatzspreizkörper-Spreizbereich des Ankerbolzens nach hinten hin, was insbesondere beinhalten soll, dass sich im Zusatzspreizkörper-Spreizbereich die Oberfläche des Ankerbolzens nach hinten hin an die Längsachse des Ankerbolzens annähert, insbesondere kontinuierlich annähert.

Vorzugsweise sind der Spreizhülsen-Spreizbereich und der Zusatzspreizkörper-Spreizbereich, insbesondere axial, voneinander beabstandet, was im Hinblick auf die Bauform vorteilhaft sein kann. Insbesondere bilden der Spreizhülsen-Spreizbereich und der Zusatzspreizkörper-Spreizbereich zur Längsachse des Ankerbolzens geneigte Schrägen.

Zweckmässigerweise berührt der Zusatzspreizkörper, zumindest zeitweise während des Montagevorgangs und vorzugsweise auch schon vor dem Montagevorgang, den Ankerbolzen, insbesondere an dessen Zusatzspreizkörper-Spreizbereich. Dies kann im Hinblick auf die Zuverlässigkeit und den konstruktiven Aufwand vorteilhaft sein.

Soweit hier von der Axialrichtung, der Umfangsrichtung und der Radialrichtung die Rede ist, soll sich dies insbesondere auf die Längsachse des Ankerbolzens beziehen, welche insbesondere mit der Längsachse des Spreizankers zusammenfallen kann. Die Längsachse des Ankerbolzens verläuft insbesondere in Montagerichtung, also in der Richtung, in welche der Ankerbolzen bei bestimmungsgemässer Montage in ein Bohrloch eingeschoben wird und/oder in Auszugsrichtung, also in der Richtung, in welcher der Ankerbolzen nach der Montage bestimmungsgemäss belastet wird. Die Richtungsangaben "vorne" und "hinten" beziehungsweise "rückwärtig" sollen hier einheitlich verwendet werden, dies insbesondere soweit diese Richtungsangaben im Zusammenhang mit dem Ankerbolzen, der Spreizhülse und dem Zusatzspreizkörper verwendet werden. Insbesondere sollen sich die Richtungsangaben auf die Axialrichtung beziehen.

Der Ankerbolzen kann auch mehrteilig ausgeführt sein und beispielsweise eine Ankerstange und ein mit der Ankerstange verschraubtes Vorderteil aufweisen, an dem der Spreizhülsen-Spreizbereich und vorzugsweise auch der Zusatzspreizkörper-Spreizbereich angeordnet sind. Besonders bevorzugt ist es aber, dass der Ankerbolzen einstückig ausgebildet ist. Vorzugsweise bestehen die Spreizhülse, der zumindest eine Zusatzspreizkörper und/oder der Ankerbolzen aus einem Metallmaterial. Vorzugsweise sind die Spreizhülse und der Zusatzspreizkörper separate Teile. Insbesondere sind der Spreizhülsen-Spreizbereich und der Zusatzspreizkörper-Spreizbereich zugfest am Ankerbolzen angeordnet, so dass über diese Bereiche nach hinten gerichtete Zugkräfte übertragen werden können.

Die Spreizhülse umgibt den Ankerbolzen, insbesondere ringförmig. Die Spreizhülse bildet vorzugsweise einen offenen Ring, also eine C-Form, in dem beziehungsweise in der der Ankerbolzen aufgenommen ist. Dies kann eine besonders einfache Herstellung durch Aufwickeln eines Bandes um den Ankerbolzen ermöglichen. Vorzugsweise sind die Spreizhülse und der Ankerbolzen koaxial angeordnet.

In einem rückwärtigen Bereich des Ankerbolzens kann der Ankerbolzen eine Lastangriffsstruktur aufweisen. Die Lastangriffsstruktur dient zum Einleiten von in Auszugsrichtung gerichteten Zugkräften in den Ankerbolzen. Die Lastangriffsstruktur kann beispielsweise ein Aussengewinde oder ein Innengewinde sein. In einer anderen Ausgestaltung kann die Lastangriffsstruktur auch ein Kopf sein, der ein Querschnittsmaximum bildet.

Soweit nicht anders angegeben sollen die hier beschriebenen Merkmale vorzugsweise für einen nicht-montierten Spreizanker, also einen Spreizanker vor der Montage, gelten, und/oder für einen Zustand, in welchem der Zusatzspreizkörper-Spreizbereich den Zusatzspreizkörper noch nicht radial versetzt hat.

Der Spreizanker kann auch mehrere Zusatzspreizkörper aufweisen, von denen zumindest einige, vorzugsweise alle, so ausgeführt sind, wie es hier im Zusammenhang mit einem einzigen Zusatzspreizkörper erläutert ist. Sofern mehrere Zusatzspreizkörper vorgesehen sind, weist der Ankerbolzen vorzugsweise mehrere Zusatzspreizkörper-Spreizbereiche auf, jeweils einen pro Zusatzspreizkörper. Die Zusatzspreizkörper-Spreizbereiche sind vorzugsweise voneinander getrennt.

Vorzugsweise weist die Spreizhülse einen nach vorne gerichteten Mitnehmer für den Zusatzspreizkörper auf. Dieser Mitnehmer kann den Zusatzspreizkörper axial relativ zur Spreizhülse festlegen, wenn der Ankerbolzen relativ zur Spreizhülse nach hinten bewegt wird, so dass der Zusatzspreizkörper-Spreizbereich gegen den Zusatzspreizkörper wirken kann.

Eine besonders vorteilhafte Ausgestaltung der Erfindung kann darin liegen, dass der Zusatzspreizkörper, insbesondere radial aussenseitig am Zusatzspreizkörper, die Spreizhülse berührt, insbesondere an der weiter unten im Detail beschriebene Zunge der Spreizhülse. Dies kann den Herstellungsaufwand weiter reduzieren und/oder die Handhabbarkeit verbessern.

Der Zusatzspreizkörper ist in einer in der Spreizhülse ausgebildeten Ausnehmung angeordnet. An der Wand dieser Ausnehmung kann der vorgenannte Mintnehmer für den Zusatzspreizkörper in konstruktiv besonders einfacher Weise gebildet sein. Mittels einer solchen Ausnehmung kann der Zusatzspreizkörper besonders einfach und zuverlässig positioniert werden. Insbesondere erstreckt sich die Ausnehmung ausgehend von der radialen Innenseite der Spreizhülse radial nach aussen in die Spreizhülse hinein.

Vorzugsweise kann vorgesehen sein, dass die Spreizhülse an der Ausnehmung, insbesondere radial, durchbrochen ist. Gemäss dieser Ausgestaltung kann der Zusatzspreizkörper in konstruktiv besonders einfacher Weise besonders gut gegen die den Spreizanker umgebende Lochwand wirken und somit bei geringem Aufwand eine besonders effiziente Verankerung bewirken.

Die Spreizhülse weist eine Zunge auf, welche die Ausnehmung und den Zusatzspreizkörper zumindest bereichsweise überdeckt, insbesondere radial überdeckt. Insbesondere ist der Zusatzspreizkörper radial zwischen der Zunge und dem Ankerbolzen angeordnet. Insbesondere kann der Zusatzspreizkörper, wenn er vom Zusatzspreizkörper-Spreizbereich radial verdrängt wird, seinerseits die Zunge radial verdrängen und die Zunge, insbesondere unter Ausbildung eines Hinterschnitts, an die umgebende Lochwand anpressen und somit im Bohrloch verankern. Ferner kann die Zunge den Zusatzspreizkörper vor der Montage am Spreizanker sichern. Die Zunge, die auch als Lappen bezeichnet werden kann, ist insbesondere an drei Seiten freigestellt.

Die Zunge ist ein Teil der Spreizhülse. Vorzugsweise ist die Zunge integral mit dem Rest der Spreizhülse ausgeführt. Die Zunge kann in besonders einfacher Weise durch Einschneiden der Spreizhülse an drei Seiten gefertigt werden, wobei die vierte Seite ein Scharnier der Zunge bildet. Bei der Fertigung des Spreizankers kann vorgesehen werden, dass die Zunge aufgebogen wird, sodann der Zusatzspreizkörper in der Ausnehmung angeordnet wird und sodann die Zunge zurückgebogen wird und hierbei der Zusatzspreizkörper von der Zunge in der Ausnehmung gesichert wird. Insbesondere ist der Zusatzspreizkörper zwischen der Zunge und dem Ankerbolzen angeordnet.

Besonders bevorzugt ist es, dass die Zunge vom Spreizhülsen-Spreizbereich hinweg zeigt, also insbesondere nach hinten zeigt. Insbesondere kann die Zunge vorderseitig angelenkt sein. Dies kann im Hinblick auf den Herstellungsaufwand und die Funktionalität vorteilhaft sein.

Die Zunge steht zweckmässigerweise radial aussenseitig, also insbesondere an der dem Ankerbolzen radial abgewandten Seite der Spreizhülse, an der Spreizhülse vor. Dies kann die Fertigung weiter vereinfachen. Darüber hinaus kann die Zunge zu Beginn des Montagevorgangs an der Lochwand reiben und damit die Spreizhülse axial an der Lochwand sichern.

Insbesondere kann die Zunge einen Widerhaken gegen Auszug der Spreizhülse aus einem Bohrloch bilden, und die Spreizhülse somit zu Beginn des Montagevorgangs besonders wirksam an der Lochwand sichern. Demgemäss ist die Zunge so zur Längsachse geneigt, dass sie sich nach vorne hin, also insbesondere zum Spreizhülsen-Spreizbereich hin, an die Längsachse annähert, das heisst die Zunge öffnet sich nach hinten hin und/oder die Zunge zeigt nach hinten hin.

Eine weitere bevorzugte Ausgestaltung der Erfindung liegt darin, dass der Zusatzspreizkörper ein Rollkörper ist. Dies kann insbesondere beinhalten, dass der Zusatzspreizkörper zumindest eine Symmetrieachse aufweist, um welche eine Drehung um jeden beliebigen Winkel den Körper auf sich selbst abbildet. Dies kann im Hinblick auf den Herstellungsaufwand und den Spreizmechanismus vorteilhaft sein.

Der Zusatzspreizkörper kann beispielsweise Kugelform, Zylinderform, Blockform, Tropfenform oder Keilform aufweisen.

Eine andere zweckmässige Weiterbildung der Erfindung liegt darin, dass der Zusatzspreizkörper-Spreizbereich und der Spreizhülsen-Spreizbereich unterschiedlich steil sind. Dies kann insbesondere beinhalten, dass die maximalen spitzen Winkel mit Längsachse der beiden Spreizbereiche unterschiedlich sind. Hierdurch kann das Verankerungsverhalten besonders gut an die Randbedingungen angepasst werden.

Besonders bevorzugt ist es, dass der Ankerbolzen eine Vertiefung aufweist, in welcher der Zusatzspreizkörper, zumindest anfänglich, angeordnet ist. Insbesondere kann der Zusatzspreizkörper-Spreizbereich an einer Wand der Vertiefung, insbesondere an einer vorderen Wand der Vertiefung, gebildet sein. Dies kann den konstruktiven Aufwand noch weiter reduzieren. Die Vertiefung kann beispielsweise in einem Halsbereich des Ankerbolzens angeordnet sein, in welchem der Ankerbolzen eine kreiszylindrische Form hat. Die Vertiefung kann aber auch in einem konischen Spreizhülsen-Spreizbereich angeordnet sein. Die Vertiefung erstreckt sich radial in den Ankerbolzen hinein. Insbesondere kann die Vertiefung des Ankerbolzens der in der Spreizhülse ausgebildete Ausnehmung gegenüberliegen.

In einer Ausgestaltung des Spreizankers kann vorgesehen werden, dass die Spreizhülse mehrlagig, insbesondere zweilagig, ausgebildet ist. Die Spreizhülse kann also aus beispielsweise zwei ineinander geschachtelten Einzelhülsen bestehen, welche vergleichsweise geringe Wandstärken aufweisen. Eine damit einhergehende leichtere Biegbarkeit kann die Montageenergie verringern. Mehrlagige Spreizhülsen können zusätzliche Freiheitsgrade zur Steuerung des zeitlichen Ablaufs der zusätzlichen Expansion zur Verfügung stellen

Besonders bevorzugt ist es, dass der Ankerbolzen einen Mitnehmer aufweist, der die Spreizhülse, insbesondere bei der Montage des Spreizankers, nach vorne hin mitnehmen kann. Hierdurch kann unter anderem der Materialaufwand, insbesondere für die Spreizhülse, noch weiter reduziert werden. Der Mitnehmer kann an der Spreizhülse, insbesondere von hinten, angreifen und die Spreizhülse nach vorne mitnehmen, wenn der Ankerbolzen nach vorne versetzt wird. Besonders bevorzugt ist es, dass der Mitnehmer eine, insbesondere im Längsschnitt des Ankerbolzens ausgebildete, Anschlagschulter ist. Dies kann unter anderem im Hinblick auf den Fertigungsaufwand vorteilhaft sein. Insbesondere kann die Anschlagschulter den Ankerbolzen und/oder dessen Längsachse ringförmig umlaufen.

Die Erfindung betrifft auch die bestimmungsgemässe Verwendung des Spreizankers, insbesondere die bestimmungsgemässe Montage des Spreizankers. Insbesondere betrifft die Erfindung eine Verwendung eines erfindungsgemässen Spreizankers, bei welcher der Ankerbolzen relativ zur Spreizhülse, insbesondere nach hinten, versetzt wird und hierbei die Spreizhülse vom Spreizhülsen-Spreizbereich und der Zusatzspreizkörper vom Zusatzspreizkörper-Spreizbereich radial verdrängt wird. Bei Belastung wandert der Ankerbolzen mitsamt seinem Spreizhülsen-Spreizbereich relativ zur Spreizhülse nach hinten. Der Zusatzspreizkörper wird dabei von der Spreizhülse axial lagefixiert und durch den Zusatzspreizkörper-Spreizbereich radial nach aussen verschoben.

Die zeitliche Abfolge der Expansion von Spreizhülse und Zusatzspreizkörper kann in besonders einfacher Weise durch eine Variation der Lage der Ausnehmung in der Spreizhülse und der Lage der Vertiefung im Ankerbolzen oder/und durch die Formgebung der Ausnehmung in der Spreizhülse und die Formgebung der Vertiefung im Ankerbolzen konstruktiv eingestellt werden. Durch Variation der Grösse des Zusatzspreizkörpers können der Montagedurchmesser des Spreizankers sowie der Grad der möglichen zusätzlichen Expansion und die Montageenergie in besonders einfacher Weise konstruktiv eingestellt werden: Kleine Zusatzspreizkörper machen den anfänglichen Durchmesser kleiner und die Montage leichter. Vergrössert man die Zusatzspreizkörper wird höhere Montageenergie benötigt.

Merkmale, die im Zusammenhang mit dem erfindungsgemässen Spreizanker erläutert werden, können auch bei der erfindungsgemässen Verwendung zum Einsatz kommen, so wie auch umgekehrt Merkmale, die im Zusammenhang mit der erfindungsgemässen Verwendung erläutert werden, auch beim erfindungsgemässen Spreizanker zum Einsatz kommen können.

Die Erfindung wird nachfolgend anhand bevorzugter Ausführungsbeispiele näher erläutert, die schematisch in den beiliegenden Figuren dargestellt sind. In den Figuren zeigen schematisch:
- Figur 1:: eine Seitenansicht einer ersten Ausführungsform eines erfindungsgemässen Spreizankers;
- Figur 2:: eine Seitenansicht des Ankerbolzens des Spreizankers aus Figur 1 mitsamt den Zusatzspreizkörpern, aber ohne Spreizhülse,
- Figur 3:: eine Seitenansicht der Spreizhülse des Spreizankers aus Figur 1;
- Figur 4:: eine Längsschnittansicht des Spreizankers aus Figur 1;
- Figur 5:: eine Seitenansicht, analog Figur 2, des Ankerbolzens mitsamt den Zusatzspreizkörpern und ohne Spreizhülse, einer ersten Abwandlung des Spreizankers der Figuren 1 bis 4;
- Figur 6:: eine Längsschnittansicht, analog Figur 4, einer zweiten Abwandlung des Spreizankers der Figuren 1 bis 4; und
- Figur 7:: eine Seitenansicht der Einzelhülsen des abgewandelten Spreizankers gemäss Figur 6.

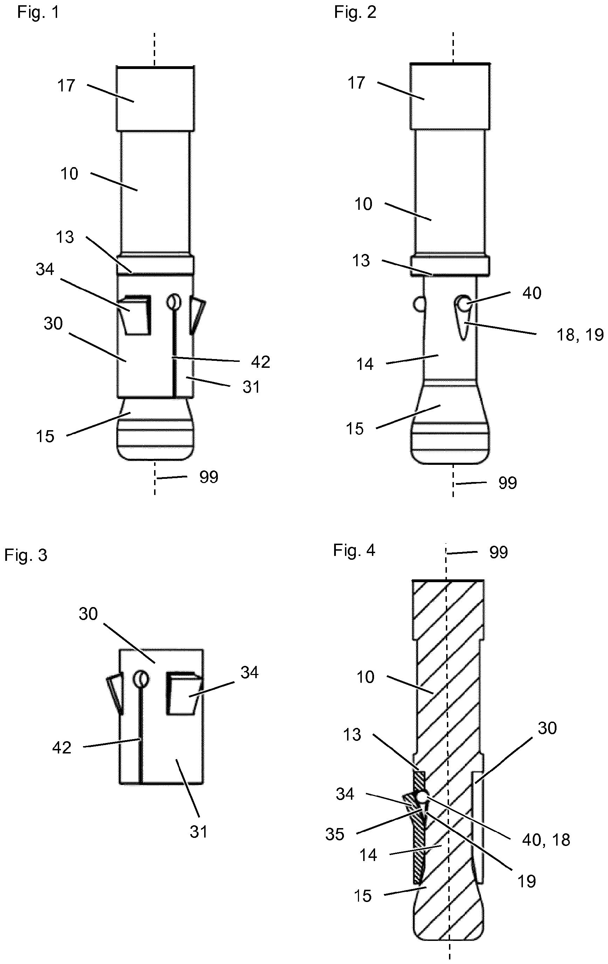

Die Figuren 1 bis 4 zeigen ein erstes Ausführungsbeispiel eines erfindungsgemässen Spreizankers. Der Spreizanker weist einen Ankerbolzen 10 mit einer Längsachse 99 sowie eine Spreizhülse 30 auf, wobei die Spreizhülse 30 den Ankerbolzen 10 ringförmig umgibt. Der Ankerbolzen 10 weist einen Halsbereich 14 mit zumindest annähernd konstantem Querschnitt auf. Im Anschluss an den Halsbereich 14 weist der Ankerbolzen 10 vor dem Halsbereich 14, im vorderen Endbereich des Ankerbolzens 10, einen Spreizhülsen-Spreizbereich 15 für die Spreizhülse 30 auf, der hier beispielhaft integral mit dem Rest des Ankerbolzens 10 ausgeführt ist. Am Spreizhülsen-Spreizbereich 15 weitet sich der Ankerbolzen 10 an seiner Aussenoberfläche ausgehend vom Halsbereich 14 nach vorne hin auf, das heisst der Spreizhülsen-Spreizbereich 15 konvergiert an seiner Aussenseite nach hinten hin. Die Spreizhülse 30 umgibt den Halsbereich 14 des Ankerbolzens 10. Der Spreizhülsen-Spreizbereich 15 ist grösstenteils vor der Spreizhülse 30 angeordnet. Der Halsbereich 14 ist hier kreiszylindrisch und der Spreizhülsen-Spreizbereich 15 konisch ausgebildet.

Der Ankerbolzen 10 weist ferner einen beispielsweise als Kreisring ausgebildeten Mitnehmer 13 auf, der eine Axialbewegung der Spreizhülse 30 zum rückwärtigen Ende des Ankerbolzens 10 hin, das heisst eine Axialbewegung der Spreizhülse 30 vom Spreizhülsen-Spreizbereich 15 hinweg, begrenzt.

An seinem dem Spreizhülsen-Spreizbereich 15 entgegengesetzten rückwärtigen Endbereich weist der Ankerbolzen 10 eine, hier beispielsweise als Aussengewinde dargestellte, Lastangriffsstruktur 17 zum Einleiten von Zugkräften in den Ankerbolzen 10 auf. Auf diesem Aussengewinde kann eine nicht dargestellte Mutter mit korrespondierendem Innengewinde angeordnet sein.

Die Spreizhülse 30 weist mehrere Schlitze 42 auf, welche sich ausgehend von der vorderen Stirnseite der Spreizhülse 30, die dem Spreizhülsen-Spreizbereich 15 zugewandt ist, axial nach hinten in die Spreizhülse 30 hinein erstrecken. Die Schlitze 42 teilen Spreizzungen 31 der Spreizhülse 30 voneinander ab. Diese Spreizzungen 31 sind jeweils an ihrer Vorderseite und an ihren beiden entgegengesetzten Längsseiten frei und an ihren jeweiligen Rückseiten miteinander verbunden. Die Spreizzungen 31 sind somit vorderseitig frei und zeigen axial nach vorne, zum Spreizhülsen-Spreizbereich 15 hin.

Die Spreizhülse 30 weist mehrere Ausnehmungen 35 auf, welche sich von der radialen Innenseite der Spreizhülse 30 radial nach aussen hin erstrecken. Der Ankerbolzen 10 weist, insbesondere in seinem Halsbereich 14, mehrere radiale Vertiefungen 18 auf, welche sich radial nach innen in den Ankerbolzen 10 erstrecken. Jede Vertiefung 18 im Ankerbolzen 10 ist von einer Ausnehmung 35 unter Bildung eines Vertiefungs-Ausnehmungs-Paares überdeckt. In jedem der Vertiefungs-Ausnehmungs-Paare ist ein Zusatzspreizkörper 40 angeordnet. Am vorderen Ende jeder Vertiefung 18 ist eine schräge Wand angeordnet, die einen Zusatzspreizkörper-Spreizbereich 19 zum radialen Verdrängen des jeweiligen Zusatzspreizkörper 40 nach aussen bildet.

An den Ausnehmungen 35 ist die Spreizhülse 30 radial durchbrochen. Allerdings weist die Spreizhülse 30 Zungen 34 auf, wobei jede Ausnehmung 35 von einer Zunge 34 radial abgedeckt ist. Die Zungen 34 stehen an der Spreizhülse 30 radial nach aussen vor. Die Zungen 34 sind an ihrem jeweils vorderen Ende mit der verbleibenden Spreizhülse 30 verbunden. Die Zungen 34 sind somit rückseitig frei und zeigen nach hinten, vom Spreizhülsen-Spreizbereich 15 weg. Die Zungen 34 sind einstückig mit dem Rest der Spreizhülse 30 ausgeführt. Insbesondere können die Zungen 34 jeweils durch U-förmiges Einschneiden der Spreizhülse 30 gebildet werden.

Beim Montieren des Spreizankers wird der Ankerbolzen 10 mit seinem vorderen Ende voran in Richtung der Längsachse 99 des Ankerbolzens 10 in ein Bohrloch geschoben. Aufgrund des Mitnehmers 13, der eine Verschiebung der Spreizhülse 30 zum hinteren Ende des Ankerbolzens 10 begrenzt, wird dabei auch die Spreizhülse 30 in das Bohrloch eingebracht. Sodann wird der Ankerbolzen 10, beispielsweise durch Anziehen einer Mutter, die auf der als Aussengewinde ausgebildeten Lastangriffsstruktur 17 angeordnet ist, wieder ein Stück weit aus dem Bohrloch herausgezogen. Aufgrund von Reibung mit der Bohrlochwand, die insbesondere an den radial nach aussen vorstehenden Zungen 34 generiert wird, bleibt die Spreizhülse 30 dabei zurück und es kommt zu einer axialen Verschiebung des Ankerbolzens 10 relativ zur Spreizhülse 30 nach hinten. Die Zusatzspreizkörper 40 werden dabei in den Ausnehmungen 35 in der Spreizhülse 30 axial an der Spreizhülse 30 festgehalten, so dass eine axiale Verschiebung des Ankerbolzens 10 relativ zu den Zusatzspreizkörpern 40 nach hinten resultiert. Im Verlauf dieser Verschiebung laufen zum einen die Spreizzungen 31 der Spreizhülse 30 auf den Spreizhülsen-Spreizbereich 15 auf und werden von diesem radial gegen die Bohrlochwand nach aussen gedrängt, und zum anderen laufen die Zusatzspreizkörper 40 auf ihre Zusatzspreizkörper-Spreizbereiche 19 auf, und werden von diesen radial nach aussen gegen die jeweils radial darüberliegenden Zunge 34 gedrängt, die wiederum radial nach aussen gegen die Lochwand gedrängt werden. Durch diese Mechanismen wird der Spreizanker im Substrat fixiert.

Bei der Ausführungsform der Figuren 1 bis 4 sind die Zusatzspreizkörper 40 kugelförmig und die Vertiefungen 18 tropfenförmig ausgebildet, wobei die Zusatzspreizkörper-Spreizbereiche 19 nach vorne spitz zulaufen.

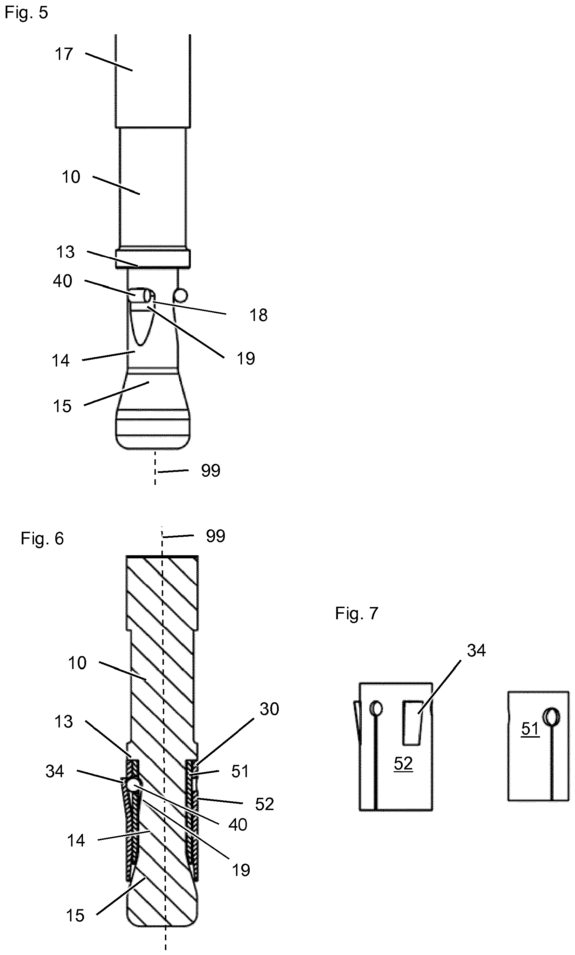

In einer in Figur 5 dargestellten ersten Abwandlung der ersten Ausführungsform sind die Zusatzspreizkörper 40 kreiszylindrisch und die Vertiefungen 18 entsprechend breiter ausgeführt. Ansonsten entspricht diese erste Abwandlung der ersten Ausführungsform, so dass auf die Figuren 1, 3 und 4 sowie auf die Beschreibung der ersten Ausführungsform verwiesen wird, die auch für die erste Abwandlung gelten.

In einer in den Figur 6 und 7 dargestellten zweiten Abwandlung der ersten Ausführungsform ist die Spreizhülse 30 zweilagig mit zwei koaxialen Einzelhülsen 51 und 52 ausgeführt. Ansonsten entspricht diese zweite Abwandlung der ersten Ausführungsform, so dass auf die Figuren 1 und 2 sowie auf die Beschreibung der ersten Ausführungsform verwiesen wird, die auch für die zweite Abwandlung gelten.

Die Einzelhülse 51 ist innerhalb der Einzelhülse 52 angeordnet. Die Zungen 34 sind an der aussenliegenden Einzelhülse 52 befestigt und integral mit der aussenliegenden Einzelhülse 52 ausgeführt. Die aussenliegende Einzelhülse 52 steht nach vorne über die innenliegende Einzelhülse 51 vor.

## Patentansprüche

1. Spreizanker mit
- einem Ankerbolzen (10),
- einer Spreizhülse (30), welche den Ankerbolzen (10) umgibt, wobei der Ankerbolzen (10) einen Spreizhülsen-Spreizbereich (15) zum radialen Verdrängen der Spreizhülse (30) aufweist, und
- zumindest einem Zusatzspreizkörper (40), der an der Spreizhülse (30) angeordnet ist,
- wobei der Ankerbolzen (10) einen Zusatzspreizkörper-Spreizbereich (19) zum radialen Verdrängen des Zusatzspreizkörpers (40) aufweist, und
- wobei der Zusatzspreizkörper (40) an der dem Ankerbolzen (10) radial zugewandten Seite der Spreizhülse (30) an der Spreizhülse (30) angeordnet ist,
- wobei der Zusatzspreizkörper (40) in einer in der Spreizhülse (30) ausgebildeten Ausnehmung (35) angeordnet ist,
**dadurch gekennzeichnet,**
**dass** die Spreizhülse (30) eine Zunge (34) aufweist, welche den Zusatzspreizkörper (40) zumindest bereichsweise radial überdeckt, und
**dass** die Zunge (34) die Ausnehmung (35) zumindest bereichsweise radial überdeckt.

2. Spreizanker nach Anspruch 1,
**dadurch gekennzeichnet,**
**dass** der Zusatzspreizkörper (40) den Ankerbolzen (10) berührt.

3. Spreizanker nach einem der Ansprüche 1 oder 2,
**dadurch gekennzeichnet,**
**dass** der Zusatzspreizkörper (40) radial aussenseitig am Zusatzspreizkörper (40) die Spreizhülse (30) berührt.

4. Spreizanker nach einem der vorstehenden Ansprüche,
**dadurch gekennzeichnet,**
**dass** die Spreizhülse (30) an der Ausnehmung (35) durchbrochen ist.

5. Spreizanker nach einem der vorstehenden Ansprüche,
**dadurch gekennzeichnet,**
**dass** die Zunge (34) vom Spreizhülsen-Spreizbereich (15) hinweg zeigt.

6. Spreizanker nach einem der vorstehenden Ansprüche,
**dadurch gekennzeichnet,**
**dass** die Zunge (34) radial aussenseitig an der Spreizhülse (30) vorsteht und/oder dass die Zunge (34) einen Widerhaken gegen Auszug der Spreizhülse (30) aus einem Bohrloch bildet.

7. Spreizanker nach einem der vorstehenden Ansprüche,
**dadurch gekennzeichnet,**
**dass** der Zusatzspreizkörper (40) ein Rollkörper ist.

8. Spreizanker nach einem der vorstehenden Ansprüche,
**dadurch gekennzeichnet,**
**dass** der Zusatzspreizkörper-Spreizbereich (19) und der Spreizhülsen-Spreizbereich (15) unterschiedlich steil sind.

9. Spreizanker nach einem der vorstehenden Ansprüche,
**dadurch gekennzeichnet,**
**dass** der Ankerbolzen (10) eine Vertiefung (18) aufweist, in welcher der Zusatzspreizkörper (40) angeordnet ist, und dass der Zusatzspreizkörper-Spreizbereich (19) an einer Wand der Vertiefung (18) gebildet ist.

10. Spreizanker nach einem der vorstehenden Ansprüche,
**dadurch gekennzeichnet,**
**dass** die Spreizhülse (30) mehrlagig ausgebildet ist.

11. Spreizanker nach einem der vorstehenden Ansprüche,
**dadurch gekennzeichnet,**
**dass** der Ankerbolzen (10) einen Mitnehmer (13) für die Spreizhülse (30) aufweist, der die Spreizhülse (30) nach vorne hin mitnehmen kann.

12. Verwendung eines Spreizankers nach einem der vorstehenden Ansprüche, bei welcher der Ankerbolzen (10) relativ zur Spreizhülse (30) versetzt wird und hierbei die Spreizhülse (30) vom Spreizhülsen-Spreizbereich (15) und der Zusatzspreizkörper (40) vom Zusatzspreizkörper-Spreizbereich (19) radial verdrängt wird.

## Claims

1. Expansion anchor comprising
- an anchor bolt (10),
- an expansion sleeve (30) which surrounds the anchor bolt (10), the anchor bolt (10) having an expansion-sleeve expansion region (15) for radial displacement of the expansion sleeve (30), and
- at least one additional expansion body (40) which is arranged on the expansion sleeve (30),
- the anchor bolt (10) having an additional-expansion-body expansion region (19) for radial displacement of the additional expansion body (40), and
- the additional expansion body (40) being arranged on the expansion sleeve (30) on the side of the expansion sleeve (30) that radially faces the anchor bolt (10),
- the additional expansion body (40) being arranged in a recess (35) formed in the expansion sleeve (30),
**characterized in that**
the expansion sleeve (30) has a tongue (34) which radially covers the additional expansion body (40) at least in regions, and
the tongue (34) radially covers the recess (35) at least in regions.

2. Expansion anchor according to claim 1,
**characterized in that**
the additional expansion body (40) is in contact with the anchor bolt (10).

3. Expansion anchor according to either claim 1 or claim 2,
**characterized in that**
the additional expansion body (40) is in contact with the expansion sleeve (30) radially on the outside of the additional expansion body (40).

4. Expansion anchor according to any of the preceding claims,
**characterized in that**
the expansion sleeve (30) is perforated at the recess (35).

5. Expansion anchor according to any of the preceding claims,
**characterized in that**
the tongue (34) points away from the expansion-sleeve expansion region (15).

6. Expansion anchor according to any of the preceding claims, **characterized in that** the tongue (34) protrudes radially from the outside of the expansion sleeve (30) and/or the tongue (34) forms a barb which prevents the expansion sleeve (30) from being pulled out of a borehole.

7. Expansion anchor according to any of the preceding claims,
**characterized in that**
the additional expansion body (40) is a rolling body.

8. Expansion anchor according to any of the preceding claims,
**characterized in that**
the additional-expansion-body expansion region (19) and the expansion-sleeve expansion region (15) have different levels of steepness.

9. Expansion anchor according to any of the preceding claims,
**characterized in that**
the anchor bolt (10) has a depression (18) in which the additional expansion body (40) is arranged, and the additional-expansion-body expansion region (19) is formed on a wall of the depression (18).

10. Expansion anchor according to any of the preceding claims,
**characterized in that**
the expansion sleeve (30) is multi-layered.

11. Expansion anchor according to any of the preceding claims,
**characterized in that**
the anchor bolt (10) has a driving element (13) for the expansion sleeve (30) which can drive the expansion sleeve (30) forward.

12. Use of an expansion anchor according to any of the preceding claims, in which the anchor bolt (10) is moved relative to the expansion sleeve (30) and, in the process, the expansion sleeve (30) is radially displaced from the expansion-sleeve expansion region (15) and the additional expansion body (40) is radially displaced from the additional-expansion-body expansion region (19).

## Revendications

1. Ancrage expansible présentant
- un boulon d'ancrage (10),
- un manchon expansible (30) qui entoure le boulon d'ancrage (10), le boulon d'ancrage (10) présentant une zone d'expansion (15) du manchon expansible, destinée à repousser radialement le manchon expansible (30) et
- au moins un corps expansible supplémentaire (40), qui est agencé sur le manchon expansible (30),
- le boulon d'ancrage (10) présentant une zone d'expansion (19) du corps expansible supplémentaire, destinée à repousser radialement le corps expansible supplémentaire (40) et
- le corps expansible supplémentaire (40) étant agencé sur le côté orienté radialement vers le boulon d'ancrage (10) du manchon expansible (30) sur le manchon expansible (30),
- le corps expansible supplémentaire (40) étant agencé dans un évidement (35) réalisé dans le manchon expansible (30),
**caractérisé**
**en ce que** le manchon expansible (30) présente une languette (34) qui recouvre radialement, au moins en partie, le corps expansible supplémentaire (40) et
**en ce que** la languette (34) recouvre radialement, au moins en partie, l'évidement (35).

2. Ancrage expansible selon la revendication 1,
**caractérisé**
**en ce que** le corps expansible supplémentaire (40) est en contact avec le boulon d'ancrage (10).

3. Ancrage expansible selon l'une quelconque des revendications 1 ou 2,
**caractérisé**
**en ce que** le corps expansible supplémentaire (40) est en contact sur le côté radialement externe du corps expansible supplémentaire (40) avec le manchon expansible (30).

4. Ancrage expansible selon l'une quelconque des revendications précédentes,
**caractérisé**
**en ce que** le manchon expansible (30) est interrompu au niveau de l'évidement (35).

5. Ancrage expansible selon l'une quelconque des revendications précédentes,
**caractérisé**
**en ce que** la languette (34) s'écarte de la zone d'expansion (15) du manchon expansible.

6. Ancrage expansible selon l'une quelconque des revendications précédentes,
**caractérisé**
**en ce que** la languette (34) dépasse sur le côté radialement externe du manchon expansible (30) et/ou **en ce que** la languette (34) forme un crochet s'opposant à la sortie du manchon expansible (30) d'un alésage.

7. Ancrage expansible selon l'une quelconque des revendications précédentes,
**caractérisé**
**en ce que** le corps expansible supplémentaire (40) est un corps de roulement.

8. Ancrage expansible selon l'une quelconque des revendications précédentes,
**caractérisé**
**en ce que** la zone d'expansion (19) du corps expansible supplémentaire et la zone d'expansion (15) du manchon expansible présentent une pente différente.

9. Ancrage expansible selon l'une quelconque des revendications précédentes,
**caractérisé**
**en ce que** le boulon d'ancrage (10) présente un renfoncement (18) dans lequel est agencé le corps expansible supplémentaire (40) et **en ce que** la zone d'expansion (19) du corps expansible supplémentaire est formée au niveau d'une paroi du renfoncement (18).

10. Ancrage expansible selon l'une quelconque des revendications précédentes,
**caractérisé**
**en ce que** le manchon expansible (30) est conçu de manière multicouche.

11. Ancrage expansible selon l'une quelconque des revendications précédentes,
**caractérisé**
**en ce que** le boulon d'ancrage (10) présente un élément d'entraînement (13) pour le manchon expansible (30), qui peut entraîner le manchon expansible (30) vers l'avant.

12. Utilisation d'un ancrage expansible selon l'une quelconque des revendications précédentes, lors de laquelle le boulon d'ancrage (10) est déplacé par rapport au manchon expansible (30), le manchon expansible (30) étant ainsi repoussé radialement par la zone d'expansion (15) du manchon expansible et le corps expansible supplémentaire (40) étant ainsi repoussé par la zone d'expansion (19) du corps expansible supplémentaire.
